# EUROPÄISCHE PATENTSCHRIFT

(11) **EP 1 717 732 B1**
(45) Veröffentlichungstag und Bekanntmachung des Hinweises auf die Patenterteilung: **18.09.2013**
(21) Anmeldenummer: 06005559.7
(22) Anmeldetag: 17.03.2006
(51) Int. Cl.: G06K 19/077

(54) **Verfahren zur Herstellung eines tragbaren Datenträgers**
Method for manufacturing a portable data carrier
Procédé destiné à la création d'un support de données portatif

(30) Priorität: 29.04.2005 DE 102005020099
(43) Veröffentlichungstag der Anmeldung: 02.11.2006
(73) Patentinhaber: Giesecke & Devrient GmbH, 81677 München (DE)
(72) Erfinder: Kluge, Stefan, 80997 München (DE)

(56) Entgegenhaltungen:
- EP-A- 0 557 934
- EP-A- 1 030 266
- EP-A- 1 720 122
- EP-A2- 1 223 545
- DE-A1- 10 343 734
- DE-A1-102005 020 092
- DE-C1- 10 140 662
- DE-U1- 29 803 987
- US-A- 5 376 778

## Beschreibung

Die Erfindung betrifft ein Verfahren zur Herstellung eines tragbaren Datenträgers. Weiterhin betrifft die Erfindung einen tragbaren Datenträger.

Im Rahmen des Herstellungsprozesses für einen tragbaren Datenträger besteht eine übliche Vorgehensweise darin, eine elektronische Schaltung ganz oder teilweise mit einem Material, insbesondere mit einem Kunststoffmaterial zu umgeben. Bei der elektronischen Schaltung handelt es sich in der Regel um einen integrierten Schaltkreis, insbesondere um einen Mikrocontroller. Beispielsweise kann zur Herstellung eines tragbaren Datenträgers, der als eine Chipkarte ausgebildet ist, die elektronische Schaltung in einen Kartenkörper eingesetzt werden, wobei anschließend noch weitere Herstellungsschritte ausgeführt werden. Insbesondere bei der Verwendung von Kunststoffmaterialien kann es im Rahmen des Herstellungsprozesses zu elektrostatischen Aufladungen kommen, durch die die elektronische Schaltung des tragbaren Datenträgers in einen undefinierten Zustand versetzt wird. Wenn sich die elektronische Schaltung in einem undefinierten Zustand befindet, ist der tragbare Datenträger nicht nutzbar. Um den tragbaren Datenträger dennoch einer Nutzung zuführen zu können, ist es erforderlich, die elektronische Schaltung vom undefinierten Zustand wieder in einen definierten Zustand zu überführen. Auch während des Gebrauchs des tragbaren Datenträgers kann eine Überführung der elektronischen Schaltung in einen definierten Zustand unter Umständen erforderlich sein.

Um eine Überführung von einem undefinierten in einen definierten Zustand zu ermöglichen, verfügen insbesondere als Mikrocontroller ausgebildete elektronischen Schaltungen häufig über eine Funktion, die als Reset bezeichnet wird und die elektronische Schaltung ausgehend von einem beliebigen Zustand in einen Grundzustand zurücksetzt. Dieses Zurücksetzen wird in der Regel durch Anlegen eines dafür vorgesehenen Signals an die elektronische Schaltung veranlasst.

Elektronische Schaltungen mit Reset-Funktion werden auch bei tragbaren Datenträgern, insbesondere bei Chipkarten, eingesetzt. Beispielsweise wird bei kontaktbehafteten Chipkarten während der Anschaltsequenz gemäß der Norm ISO/ IEC 7816-3 ein Reset-Signal von außen an eine dafür vorgesehene Kontaktfläche der Chipkarte angelegt. Außer im Rahmen der Anschaltsequenz kann ein Zurücksetzen der elektronischen Schaltung einer Chipkarte auch bei anderer Gelegenheit veranlasst werden. Allerdings können auf diese Weise nur elektronische Schaltungen von Chipkarten zurückgesetzt werden, die über Kontaktflächen zur berührenden Kontaktierung verfügen.

Aus der WO 01/82222 A1 ist ein Datenträger mit einer ersten Schnittstelle für ein erstes Kommunikationssignal und einer zweiten Schnittstelle für ein zweites Kommunikationssignal bekannt. Aus den Kommunikationssignalen wird jeweils ein Taktsignal abgeleitet und mittels je eines Frequenzsensors geprüft. Ein Zurücksetzen eines Prozessors erfolgt dann, wenn beim ersten Kommunikationssignal eine erste Taktfrequenz oder beim zweiten Kommunikationssignal eine zweite Taktfrequenz unterschritten wird.

Die US 5 068 521 B1 offenbart eine kontaktlose Chipkarte, die eine Batterie aufweist und deren CPU über eine Reset-Leitung zurückgesetzt wird. Nach dem Zurücksetzen der CPU wird die Chipkarte insgesamt als ein Vergusskörper ausgebildet, so dass die Reset-Leitung nicht mehr zugänglich ist. Die CPU bleibt nach dem Zurücksetzen solange in Betrieb, bis die Batterie erschöpft ist. Weiterhin offenbart die US 5 068 521 B1 eine kontaktlose Chipkarte, die über eine Einrichtung zur Detektion eines Reset-Signals verfügt. Wenn ein Reset-Signal detektiert wird, veranlasst diese Einrichtung eine Ini tialisierung der CPU. Das Reset-Signal wird mittels einer elektromagnetischen Welle kontaktlos übertragen. Die Detektion des Reset-Signals erfolgt über die Frequenz oder die Amplitude der elektromagnetischen Welle.

Weiterhin sind Chipkarten mit einer Anzeigeeinheit und zumindest einem Taster bekannt. DE 29803987 U1 sieht die Taste vor, um in der Chipkarte Strom zu sparen, indem die Anzeigeeinheit erst bei Betätigung des Tasters aktiviert wird. In einer Chipkarte gemäß EP 1023692 B1 kann durch das Drücken des Tasters ein Anzeigen des aktuellen Restbetrags einer elektronischen Börse auf der Chipkarte angefordert werden. Gemäß DE 10214875 A1 kann der Taster so mit einer Steuereinheit der Chipkarte verbunden sein, dass die Anzeigeeinheit mit dem Taster ein- und ausgeschaltet wird. Die Steuereinheit weist zudem einen außenseitig kontaktierbaren Eingang für ein Reset-Signal auf.

In DE 10343734 A1 wird die Batterie in einer Chipkarte mit Antenne erst in Antwort auf die Betätigung eines Tasters zur kontaktlosen Datenübertragung verwendet. In ähnlicher Form wird in US 5376778 durch einen Schalter die Verbindung zwischen einer Batterie und einem Prozessor der Karte geschaltet.

In Antwort auf eine erkannte mechanische Manipulation einer über einer Schaltung angeordneten Schutzschicht wird in EP 1223545 A1 die Funktion der Schaltung gesperrt.

EP 1030266 A2 zeigt eine Karte mit einem Schalter, der zwischen Antenne und einem Schaltkreis mit Prozessor angeordnet ist. Der Prozessor hat einen Eingang für die Versorgungsspannung und einen separaten Reset-Eingang. Eine Power-On-Reset-Schaltung erzeugt ausgehend von den über die Antenne empfangenen Signalen ein Signal für den Reset-Eingang des Prozessors.

EP 0 557 934 A2 verwendet einen Schalter, um zumindest Teile der Elektronik der Karte ein- oder auszuschalten. In DE 101 40 662 C1 wird ein Schalter, der mit einem Eingang des Prozessors der Karte verbunden ist, verwendet, um Kartenfunktionen zu aktivieren oder zu deaktivieren.

Der Erfindung liegt die Aufgabe zugrunde, einen tragbaren Datenträger mit wenigstens einer elektronischen Schaltung, die nicht durch eine berührende Kontaktierung von außerhalb des tragbaren Datenträgers zugänglich ist, so auszubilden, dass die elektronische Schaltung in einen definierten Zustand zurücksetzbar ist.

Diese Aufgabe wird durch ein Herstellungsverfahren mit der Merkmalskombination des Anspruchs 1 gelöst.

Das erfindungsgemäße Verfahren bezieht sich auf die Herstellung eines tragbaren Datenträgers, der wenigstens eine elektronische Schaltung und einen die elektronische Schaltung aufnehmenden Körper aufweist. Die elektronische Schaltung ist nicht durch eine berührende Kontaktierung von außerhalb des tragbaren Datenträgers zugänglich. Die Besonderheit des erfindungsgemäßen Verfahrens besteht darin, dass der tragbare Datenträger mit einer Rücksetzeinrichtung ausgerüstet wird, die von außerhalb des tragbaren Datenträgers maschinell durch Biegen des Datenträgers betätigbar ist und mit deren Hilfe eine Überführung der elektronischen Schaltung in einen definierten Zustand auslösbar ist.

Die Erfindung hat den Vorteil, dass der tragbare Datenträger nicht unbrauchbar wird, wenn die elektronische Schaltung in einen undefinierten Zustand versetzt wird. Dabei können der Aufbau des tragbaren Datenträgers und der Herstellungsprozess weitgehend beibehalten werden. Es ist lediglich erforderlich, den tragbaren Datenträger mit der Rücksetzeinrichtung auszurüsten. Mit Hilfe der Rücksetzeinrichtung ist eine zuverlässige Überführung der elektronischen Schaltung in einen definierten Zustand möglich.

In einer bevorzugten Verfahrensvariante wird die Rücksetzeinrichtung als eine Schalteinrichtung ausgebildet. Dies hat den Vorteil, dass eine einfache und kostengünstige Herstellung möglich ist und eine hohe Betriebssicherheit und unkomplizierte Bedienung gewährleistet sind.

Der Körper des tragbaren Datenträgers wird vorzugsweise durch Heißlamination von Kunststoffteilen hergestellt. Mit Hilfe der Heißlamination können die Kunststoffteile untrennbar miteinander verbunden werden und es kann eine qualitativ hochwertige Oberfläche des Körpers ausgebildet werden.

Nach Herstellung des Körpers kann eine Kavität für die Rücksetzeinrichtung in den Körper eingearbeitet werden. Das nachträgliche Ausbilden der Kavität hat den Vorteil, dass beliebige Verfahren für die Herstellung des Körpers eingesetzt werden können. Weiterhin kann im Rahmen des erfindungsgemäßen Verfahrens vorgesehen sein, dass bei der Ausbildung der Kavität wenigstens ein elektrisch leitender Bereich freigelegt wird. Insbesondere wird bei der Ausbildung der Kavität wenigstens ein elektrisch leitender Bereich freigelegt, der mit der elektronischen Schaltung verbunden ist. Dadurch können ohne zusätzlichen Aufwand Vorbereitungen zum Anschließen der Rücksetzeinrichtung getroffen werden.

Beim erfindungsgemäßen Verfahren kann weiterhin vorgesehen sein, dass die Kavität mit einem Deckel verschlossen wird.

Die Erfindung bezieht sich weiterhin auf einen tragbaren Datenträger zur Speicherung und/oder Verarbeitung von Daten, der wenigstens eine elektronische Schaltung aufweist, die nicht durch eine berührende Kontaktierung von außerhalb des tragbaren Datenträgers zugänglich ist. Der erfindungsgemäße tragbare Datenträger zeichnet sich dadurch aus, dass eine Rücksetzeinrichtung vorgesehen ist, die von außerhalb des tragbaren Datenträgers maschinell durch Biegen des Datenträgers betätigbar ist und mit deren Hilfe eine Überführung der elektronischen Schaltung in einen definierten Zustand auslösbar ist.

Die Rücksetzeinrichtung ist insbesondere als eine maschinell betätigbare Schalteinrichtung ausgebildet. Die Schalteinrichtung kann so ausgebildet sein, dass sie durch Deformation des tragbaren Datenträgers betätigbar ist. Dies ermöglicht eine Betätigung der Schalteinrichtung über die Handhabung des tragbaren Datenträgers. Weiterhin besteht die Möglichkeit, dass die Schalteinrichtung mehrere Betätigungsmodi aufweist. Dies hat den Vorteil, dass mit derselben Schalteinrichtung unterschiedliche Ereignisse auslösbar sind. Die Betätigungsmodi können beispielsweise über die Stärke der Betätigung auswählbar sein.

Der erfindungsgemäße tragbare Datenträger ist so ausgebildet, dass die Position der Schalteinrichtung von außerhalb des tragbaren Datenträgers nicht erkennbar ist. Dies ist beispielsweise dann von Vorteil, wenn eine Betätigung durch den Inhaber des tragbaren Datenträgers möglichst unterbleiben soll.

Die Schalteinrichtung ist beispielsweise als ein mechanischer Taster ausgebildet. Ebenso ist es auch möglich, dass die Schalteinrichtung als ein kapazitiver Taster ausgebildet ist. Ein kapazitiver Taster ist besonders kostengünstig herstellbar und unterliegt keinem Verschleiß.

Der erfindungsgemäße tragbarer Datenträger ist vorzugsweise als eine Chipkarte ausgebildet.

Die Erfindung wird nachstehend anhand der in der Zeichnung dargestellten Ausführungsbeispiele erläutert, bei denen der tragbare Datenträger jeweils als eine Chipkarte ausgebildet ist. Die Erfindung ist allerdings nicht auf Chipkarten beschränkt, sondern bezieht sich gleichermaßen auch auf andere tragbare Datenträger. Dabei ist als ein tragbarer Datenträger im Sinn der Erfindung ein Rechnersystem anzusehen, bei dem die Ressourcen, d.h. Speicherressourcen und/ oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für kontaktlose und/oder kontaktbehaftete Kommunikation mit einem Lesegerät oder Datenverarbeitungssystem (z.B. Personal Computer, Workstation, Server) haben.

Es zeigen:
- Fig. 1: eine erfindungsgemäß ausgebildete Chipkarte in einer schematischen Schnittdarstellung und
- Fig. 2: die in Fig. 1 dargestellte Chipkarte in einer schematischen Aufsicht.

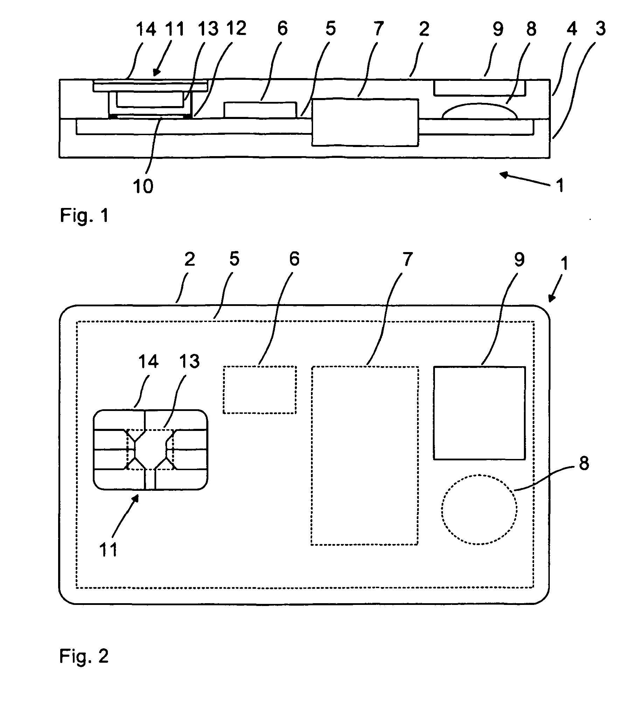

Fig.1 zeigt eine erfindungsgemäß ausgebildete Chipkarte 1 in einer schematischen Schnittdarstellung. Die Darstellung ist nicht streng auf eine Schnittebene begrenzt, sondern zeigt auch gegeneinander versetzt angeordnete Komponenten der Chipkarte 1. Es wurde daher auf die Verwendung von Schraffuren verzichtet. Aus Gründen der Anschaulichkeit ist die Darstellung stark unmaßstäblich ausgeführt. Eine zugehörige Aufsicht auf die Chipkarte 1, bei der auch im Inneren der Chipkarte 1 angeordnete Komponenten gezeigt sind, ist in Fig. 2 dargestellt.

Die Chipkarte 1 weist einen Kartenkörper 2 auf, der bzgl. seiner Abmessungen gemäß der Norm ISO/ IEC 7810 ausgebildet sein kann und beim dargestellten Ausführungsbeispiel aus einer unteren Halbschale 3 und einer oberen Halbschale 4 zusammengesetzt ist. Die Halbschalen 3 und 4 sind vorzugsweise aus Kunststoff gefertigt. Zwischen den Halbschalen 3 und 4 ist eine flexible Leiterplatte 5 mit einem ersten Mikrocontroller 6, einer Batterie 7, einen Taster 8 und einer Anzeigeeinrichtung 9 angeordnet. In einer zweistufig ausgebildeten Vertiefung 10 in der oberen Halbschale 4 ist ein Chipmodul 11 angeordnet und über elektrische Verbindungselemente 12 mit der Leiterplatte 5 verbunden. Zur mechanischen Fixierung ist das Chipmodul 11 mit dem Kartenkörper 2 verklebt. Das Chipmodul 11 weist einen zweiten Mikrocontroller 13 auf, in dem beispielsweise eine Anwendungssoftware der Chipkarte 1 implementiert ist. Weiterhin kann das Chipmodul 11 ein Kontaktfeld 14 aufweisen, das von einem nicht figürlich dargestellten externen Gerät insbesondere für eine Datenübertragung berührend kontaktierbar ist. Das Kontaktfeld 14 kann aber auch entfallen, wenn ausschließlich eine kontaktlose Datenübertragung vorgesehen ist.

Der erste Mikrocontroller 6 dient beim dargestellten Ausführungsbeispiel der Ansteuerung der Anzeigevorrichtung 9, so dass der zweite Mikrocontroller 13 über den ersten Mikrocontroller 6 Zugriff auf die Anzeigevorrichtung 9 hat. Der Taster 8 kann je nach Ausführungsbeispiel unterschiedliche und insbesondere auch mehrere Aufgaben übernehmen. Beispielsweise kann der Taster 8 der Aktivierung der Anzeigevorrichtung 9 dienen. Alternativ dazu oder zusätzlich kann der Taster 8 dazu dienen, den ersten Mikrocontroller 6 in einen definierten Zustand zurückzusetzen. Eine derartige Maßnahme ist erforderlich, wenn der erste Mikrocontroller 6 beispielsweise durch elektrostatische Aufladungseffekte in einen undefinierten Zustand gebracht wurde. Dies kann insbesondere bei der Herstellung der Chipkarte 1 geschehen. Kommt es tatsächlich zu einem undefinierten Zustand des ersten Mikrocontrollers 6, kann die Chipkarte 1 nur dann ihrer bestimmungsgemäßen Verwendung zugeführt werden, wenn es gelingt, den ersten Mikrocontroller 6 in einen definierten Zustand zurückzusetzen. Wie im Folgenden noch näher erläutert wird, kann dies im Rahmen der Erfindung mit Hilfe des Tasters 8 oder auch auf andere Weise geschehen. Ebenso kann auch vorgesehen sein, den zweiten Mikrocontroller 13 mit Hilfe des Tasters 8 in einen definierten Zustand zurückzusetzen. Beim dargestellten Ausführungsbeispiel kann der zweite Mikrocontroller 13 allerdings auch über eine berührende Kontaktierung des Kontaktfeldes 14 in einen definierten Zustand zurückgesetzt werden, so dass der Taster 8 hierfür nicht zwingend benötigt wird. Für dieses Ausführungsbeispiel wird daher lediglich das Zurücksetzen des ersten Mikrocontrollers 6 näher beschrieben. Das Zurücksetzen des zweiten Mikrocontrollers 13 kann auf analoge Weise erfolgen.

Um ein Zurücksetzen des ersten Mikrocontrollers 6 mit Hilfe des Tasters 8 zu ermöglichen, wird der Taster 8 beispielsweise zwischen Masse und einen nicht figürlich dargestellten Reset-Eingang des ersten Mikrocontrollers 6 geschaltet. Der Reset-Eingang des ersten Mikrocontrollers 6 liegt über einen Pull-up-Widerstand, der ebenfalls nicht figürlich dargestellt ist, auf Versorgungsspannungsniveau. Durch Betätigen des Tasters 8 wird der Reset-Eingang des ersten Mikrocontrollers 6 auf Masse gelegt und nach Beendigung der Tasterbetätigung durch den Pull-up-Widerstand wieder auf Versorgungsspannungsniveau hoch gezogen. Eine derartige Potentialänderung am Reset-Eingang des ersten Mikrocontrollers 6 löst ein Zurücksetzen des ersten Mikrocontrollers 6 aus, so dass sich der erste Mikrocontroller 6 nach dem Betätigen des Tasters 8 in einem definierten Zustand befindet.

Wenn der Taster 8 ausschließlich für das Zurücksetzen des ersten Mikrocontrollers 6 vorgesehen ist, kann ein sehr einfach ausgebildeter Taster 8 verwendet werden, der lediglich zwischen einem geöffneten und einem geschlossenen Zustand umgeschaltet werden kann. Diverse Ausführungsbeispiele eines derartigen Tasters 8 werden im Folgenden noch näher beschrieben.

Der Taster 8 kann so in den Kartenkörper 2 der Chipkarte 1 eingebaut werden, dass er von außen nicht sichtbar ist. In diesem Fall kann beispielsweise vorgesehen sein, dass der Taster 8 nach Fertigstellung der Chipkarte 1 maschinell betätigt wird, um einen durch den Herstellungsprozess gegebenenfalls entstandenen undefinierten Zustand des ersten Mikrocontrollers 6 wieder zu beseitigen. In einer Abwandlung wird der Taster 8 so ausgeführt, dass er durch ein starkes Biegen der Chipkarte 1 betätigt wird. Dies bedeutet, dass der erste Mikrocontroller 6 durch Biegen der Chipkarte 1 zurückgesetzt werden kann. Auch bei dieser Abwandlung kann der Taster 8 beispielsweise nach Fertigstellung der Chipkarte 1 betätigt werden. Hierzu wird die Chipkarte 1 über entsprechend angeordnete Transportrollen geführt und dabei gebogen.

## Patentansprüche

1. Verfahren zur Herstellung eines tragbaren Datenträgers (1) mit Batterie (7), der wenigstens eine Steuereinheit (6), die nicht durch eine berührende Kontaktierung von außerhalb des tragbaren Datenträgers (1) zugänglich ist, einen die elektronische Steuereinheit (6) aufnehmenden Körper (2) und eine Schalteinrichtung (8), die von außerhalb des tragbaren Datenträgers (1) betätigbar ist, aufweist,
**dadurch gekennzeichnet,**
**dass** die Schalteinrichtung (8) mit einem Reset-Eingang der Steuereinheit (6) in dem tragbaren Datenträger (1) verbunden wird, so dass mit Hilfe der Schalteinrichtung (8) ein Übergang des Betriebszustandes der Steuereinheit (6) in einen definierten Zustand auslösbar ist,
**dass** ein maschinelles Betätigen der Schalteinrichtung (8) nach Fertigstellung des tragbaren Datenträgers (1) erfolgt, damit der tragbare Datenträger (1) nicht unbrauchbar wird, wenn die elektronische Steuereinheit (6) bei der Herstellung in einen undefinierten Zustand versetzt worden ist,
**dass** die Position der Schalteinrichtung (8) in dem Datenträger (1) von außerhalb des tragbaren Datenträgers (1) nicht erkennbar ist und
**dass** die Schalteinrichtung (8) maschinell durch ein Biegen des tragbaren Datenträgers betätigt wird.

2. Verfahren nach Anspruch 1, **dadurch gekennzeichnet, dass** der tragbare Datenträger über entsprechend angeordnete Transportrollen geführt und dabei gebogen wird.

3. Tragbarer Datenträger zur Speicherung und/ oder Verarbeitung von Daten, mit wenigstens einer Steuereinheit (6), die nicht durch eine berührende Kontaktierung von außerhalb des tragbaren Datenträgers (1) zugänglich ist, einem die elektronische Steuereinheit (6) aufnehmenden Körper (2), einer Batterie (7) und einer Schalteinrichtung (8), die von außerhalb des tragbaren Datenträgers (1) betätigbar ist, **dadurch gekennzeichnet,**
**dass** die Schalteinrichtung (8) mit einem Reset-Eingang der Steuereinheit (6) in dem tragbaren Datenträger (1) verbunden ist, so dass mit Hilfe der Schalteinrichtung (8) ein Übergang des Betriebszustandes der Steuereinheit (6) in einen definierten Zustand auslösbar ist, damit der tragbare Datenträger (1) nicht unbrauchbar wird, wenn die elektronische Steuereinheit (6) in einen undefinierten Zustand versetzt worden ist,
**dass** die Rücksetzeinrichtung als eine maschinell durch Biegen des tragbaren Datenträgers betätigbare Schalteinrichtung (8) ausgebildet ist, und
**dass** die Position der Schalteinrichtung (8) in dem Datenträger (1) von außerhalb des tragbaren Datenträgers (1) nicht erkennbar ist.

4. Tragbarer Datenträger nach Anspruch 3, **dadurch gekennzeichnet, dass** er als eine Chipkarte ausgebildet ist.

## Claims

1. A method for manufacturing a portable data carrier (1) with a battery (7), having at least one control unit (6) that is inaccessible for a touching-type contacting from outside the portable data carrier (1), a body (2) accommodating the electronic control unit (6) and a switching device (8) that is actuatable from outside the portable data carrier (1),
**characterized in that**
the switching device (8) is connected with a reset input of the control unit (6) in the portable data carrier (1), such that with the aid of the switching device (8) a transition of the operation state of the control unit (6) to a defined state can be triggered,
a machine actuation of the switching device (8) takes place after the completion of the portable data carrier (1), so that the portable data carrier (1) does not become useless when the electronic control unit (6) was switched to an undefined state during the manufacture, the position of the switching device (8) in the data carrier (1) is not recognizable from outside the portable data carrier (1) and
the switching device (8) is machine-actuated by bending the portable data carrier.

2. The method according to claim 1, **characterized in that** the portable data carrier is guided over correspondingly arranged transport rolls and is bent thereby.

3. A portable data carrier for storing and/ or processing data, having at least one control unit (6) that is inaccessible for a touching-type contacting from outside the portable data carrier (1), a body (2) accommodating the electronic control unit (6), a battery (7) and a switching device (8) that is actuatable from outside the portable data carrier (1),
**characterized in that**
the control device (8) is connected with a reset input of the control unit (6) in the portable data carrier (1), such that with the aid of the switching device (8) a transition of the operation state of the control unit (6) to a defined state can be triggered, so that the portable data carrier (1) does not become useless when the electronic control unit (6) was switched to an undefined state,
the reset device is configured as a switching device (8) that can be machine-actuated by bending the portable data carrier, and
that the position of the switching device (8) in the data carrier (1) is not recognizable from outside the portable data carrier (1).

4. The portable data carrier according to claim 3, **characterized in that** it is configured as a chip card.

## Revendications

1. Procédé de fabrication d'un support de données (1) portable à pile (7) qui comporte au moins une unité de commande (6) non accessible par une mise en contact avec attouchement à partir de l'extérieur du support de données (1) portable, un corps (2) hébergeant l'unité de commande électronique (6), et un dispositif de commutation (8) actionnable à partir de l'extérieur du support de données (1) portable,
**caractérisé**
**en ce que** le dispositif de commutation (8) est relié avec une entrée Reset de l'unité de commande (6) dans le support de données (1) portable, de telle sorte que, à l'aide du dispositif de commutation (8), une passage de l'état de fonctionnement de l'unité de commande (6) à un état défini est déclenchable,
**en ce qu'**un actionnement par machine du dispositif de commutation (8) a lieu après achèvement du support de données (1) portable afin que le support de données (1) portable ne devienne pas inutilisable quand l'unité de commande électronique (6) a, lors de la fabrication, été portée à un état non défini,
**en ce que** la position du dispositif de commutation (8) dans le support de données (1) n'est par reconnaissable à partir de l'extérieur du support de données (1) portable et
**en ce que** le dispositif de commutation (8) est actionné par machine par un courbage du support de données portable.

2. Procédé selon la revendication 1, **caractérisé en ce que** le support de données portable est véhiculé à travers des rouleaux de transport agencés de manière appropriée et est en même temps courbé.

3. Support de données portable destiné à la mémorisation et/ou au traitement de données, comportant au moins une unité de commande (6) non accessible par une mise en contact avec attouchement à partir de l'extérieur du support de données (1) portable, un corps (2) hébergeant l'unité de commande électronique (6), une pile (7) et un dispositif de commutation (8) actionnable à partir de l'extérieur du support de données (1) portable,
**caractérisé**
**en ce que** le dispositif de commutation (8) est relié avec une entrée Reset de l'unité de commande (6) dans le support de données (1) portable, de telle sorte que, à l'aide du dispositif de commutation (8), une passage de l'état de fonctionnement de l'unité de commande (6) à un état défini est déclenchable, afin que le support de données (1) portable ne devienne pas inutilisable quand l'unité de commande électronique (6) a été portée à un état non défini,
**en ce que** le dispositif de remise à l'état initial est réalisé sous forme d'un dispositif de commutation (8) actionnable par machine par courbage du support de données portable, et
**en ce que** la position du dispositif de commutation (8) dans le support de données (1) n'est par reconnaissable à partir de l'extérieur du support de données (1) portable.

4. Support de données portable selon la revendication 3, **caractérisé en ce qu'**il est réalisé sous forme d'une carte à puce.
